# EUROPÄISCHE PATENTSCHRIFT

(11) **EP 2 229 617 B1**
(45) Veröffentlichungstag und Bekanntmachung des Hinweises auf die Patenterteilung: **11.05.2011**
(21) Anmeldenummer: 07847835.1
(22) Anmeldetag: 05.12.2007
(51) Int. Cl.: G06F 3/042, G09F 27/00

(54) **INTERAKTIONSANORDNUNG ZUR INTERAKTION ZWISCHEN EINEM BILDSCHIRM UND EINEM ZEIGEROBJEKT**
INTERACTION ARRANGEMENT FOR INTERACTION BETWEEN A DISPLAY SCREEN AND A POINTER OBJECT
SYSTÈME D'INTERACTION POUR INTERACTION ENTRE UN ÉCRAN ET UN OBJET INDICATEUR

(43) Veröffentlichungstag der Anmeldung: 22.09.2010
(73) Patentinhaber: Almeva AG, 9223 Schweizersholz (CH)
(72) Erfinder: HAUKE, Rudolf, 89168 Niederstotzingen (DE); BAEUERLE, Jens-Uwe, CH-8280 Kreuzlingen (CH)
(74) Vertreter: Itze, Peter
(86) Internationale Anmeldenummer: PCT/EP2007/063340
(87) Internationale Veröffentlichungsnummer: WO 2009/071121

(56) Entgegenhaltungen:
- EP-A- 1 821 184
- US-A1- 2001 012 001
- US-A1- 2001 020 933
- US-A1- 2006 158 435
- US-B1- 7 225 414

## Beschreibung

Die Erfindung betrifft eine Interaktionsanordnung zur Interaktion zwischen mindestens einem hinter einer transparenten Scheibe angeordneten Bildschirm und mindestens einem vor der Scheibe befindlichen Zeigerobjekt, umfassend mindestens zwei hinter der Scheibe angeordnete Kameras, deren optische Achsen im Wesentlichen senkrecht zur Scheibe ausgerichtet sind, wobei jeder der Kameras eine Ablenkeinheit zugeordnet ist, mittels derer ein Strahlengang von einem Interaktionsbereich in der Nähe und vor der Scheibe in die Kamera lenkbar ist und eine mit jeder der Kameras verbundene Rechnereinheit zur Ermittlung einer Position des für mindestens zwei der Kameras sichtbar geführten Zeigerobjekts.

Interaktive Bildschirme sind unter der Bezeichnung Touchscreen bekannt, bei denen ein Nutzer ein Zeigerobjekt, beispielsweise seinen Finger auf dem Bildschirm bewegt. Eine Position bzw. Bewegung des Zeigerobjekts auf dem Bildschirm wird mittels mechanischer Sensoren detektiert. Eine vorbestimmte Aktion wird abhängig von der Position oder anderen Aktionen des Zeigerobjekts ausgelöst, beispielsweise durch Drücken auf einen bestimmten Bereich des Bildschirms. Solche Systeme unterliegen mechanischem Verschleiß durch Vandalismus und Verkratzen und sind wegen daraus folgendem erhöhten Wartungsaufwand nur bedingt für Dauerbenutzung, beispielsweise im Öffentlichen Bereich geeignet.

Es sind daher Systeme entwickelt worden, die die Position des Zeigerobjekts bezüglich einer passiven Oberfläche mittels optischer Detektion ermitteln. In der US 7,034,807 ist eine Anordnung zur Interaktion eines Nutzers mit einem Bildschirm durch ein Schaufenster offenbart. Der durch das Schaufenster sichtbare Bereich des Bildschirms dient als passive Berührungsfläche. Das System umfasst eine Aufzeichnungseinheit für die Aufzeichnung des Zeigerobjekts in der Nähe der Berührungsfläche mit optischen Mitteln. Eine mit der Aufzeichnungseinheit verbundene Rechnereinheit kann eine Position des Zeigerobjekts in der Nähe der Berührungsfläche aus den von der Aufzeichnungseinheit aufgezeichneten Signalen berechnen. Der Bildschirm ist hinter dem Schaufenster , d. h. vom Nutzer durch das Schaufenster getrennt, angeordnet. Die Aufnahmeeinheit umfasst beispielsweise zwei Kameras und ist ebenfalls hinter dem Schaufenster angeordnet. Mittels einer Ablenkeinheit, beispielsweise Spiegeln oder Prismen, die oberhalb oder unterhalb der Berührungsfläche angeordnet sind, wird ein Strahlengang von der Aufnahmeeinheit zu einem Bereich vor der Berührungsfläche gelenkt. Um den Kontrast zu erhöhen, wird der Bereich vor der Berührungsfläche mit Infrarotlicht beleuchtet, das den gleichen Strahlengang aufweist, wie die Aufnahmeeinheit. In Bezug auf die Berührungsfläche sind der Ablenkeinheit gegenüberliegend reflektierende Flächen angeordnet. Sie reflektieren das Infrarotlicht und dienen als Hintergrund, vor dem das Zeigerobjekt mit erhöhtem Kontrast detektiert werden kann. Die Position des Zeigerobjekts kann dann beispielsweise durch Triangulation ermittelt werden.

Ähnliche kamerabasierte interaktive Systeme sind beispielsweise in der WO 02/03316 A1, der EP 1420335 A1 und der DE 10163648 A1 offenbart. Diese Dokumente lehren die Benutzung einer Aufnahmeeinheit mit mindestens zwei Kameras mit einander überlappenden Sichtfeldern, die eine von einem Rahmen begrenzte Berührungsfläche umfassen. Die Anwesenheit eines Zeigerobjekts auf oder in der Nähe der Berührungsfläche wird durch Analyse der Unterschiede zwischen zwei aufeinanderfolgenden Bildern der Berührungsfläche detektiert. Wenn ein Zeigerobjekt vorhanden ist, werden die aufgenommenen Bilddaten so verarbeitet, dass nur ausgewählte Unterbereiche des Bildes ausgewertet werden.

Bekannten kamerabasierten interaktiven Systemen wohnt das Problem inne, dass die von der Aufnahmeeinheit aufgenommenen Bilder häufig durch Licht aus anderen Quellen verfälscht sind, beispielsweise direkt einfallendes, gestreutes oder reflektiertes Licht aus der Umgebung. Licht aus solchen externen Quellen hat oft eine höhere Intensität als vom Zeigerobjekt ausgehendes Licht. Da die Kamerasteuerung sich in der Regel auf die maximale Intensität einstellt, wird die Detektion des Zeigerobjekts häufig erschwert oder unmöglich. Außerdem ist das aufgenommene Bild häufig sehr empfindlich bezüglich Veränderungen der Umgebungsbeleuchtung, beispielsweise zwischen Tag und Nacht. Diese Umstände führen zu Fehlern bei der Positionsbestimmung des Zeigerobjekts.

Um diese Fehler zu reduzieren, kann eine zusätzliche Infrarotbeleuchtung zur Beleuchtung des Bereichs vor der Berührungsfläche zusammen mit entsprechend infrarotempfindlichen Kameras eingesetzt werden. Der Kontrast lässt sich weiter durch die oben erwähnten reflektierenden Flächen verbessern. Das beleuchtete Zeigerobjekt kann dann mit höherem Kontrast detektiert werden. Allerdings wird das System auf diese Weise komplexer und kostspieliger.

Ein weiteres Problem ergibt sich mit doppelt verglasten Schaufenstern zwischen Nutzer und Bildschirm. Licht kann zwischen den Fensterscheiben reflektiert werden, die Aufnahmeeinheit erreichen und das aufgenommene Bild verfälschen und auf diese Weise die Bestimmung der Position des Zeigerobjekts erschweren oder verunmöglichen.

Es ist daher eine Aufgabe der Erfindung, eine verbesserte Interaktionsanordnung zur Interaktion zwischen einem Bildschirm und einem Zeigerobjekt anzugeben.

Die Aufgabe wird erfindungsgemäß gelöst durch eine Interaktionsanordnung mit den Merkmalen des Anspruchs 1.

Vorteilhafte Weiterbildungen sind Gegenstand der Unteransprüche.

Eine erfindungsgemäße Interaktionsanordnung zur Interaktion zwischen mindestens einem hinter einer transparenten Scheibe angeordneten Bildschirm und mindestens einem vor der Scheibe befindlichen Zeigerobjekt umfasst mindestens zwei hinter der Scheibe angeordnete Kameras, deren optische Achsen insbesondere im Wesentlichen senkrecht zur Scheibe ausgerichtet sind. Jeder der Kameras ist eine Ablenkeinheit zugeordnet, mittels derer ein Strahlengang von einem Interaktionsbereich vor der Scheibe in deren Nähe in die Kamera lenkbar ist. Eine mit jeder der Kameras verbundene Rechnereinheit dient der Ermittlung einer Position des für mindestens zwei der Kameras sichtbar geführten Zeigerobjekts. Der Interaktionsbereich wird stroboskopartig mit Infrarotlicht beleuchtet. Die Kameras sind infrarotempfindlich und werden mit der stroboskopartigen Beleuchtung synchronisiert. Infrarotbeleuchtung ist für vor der transparenten Scheibe stehende Personen nicht wahrnehmbar, verbessert bei entsprechend empfindlicher Kamera aber den Kontrast der Aufnahmen. Gebräuchliche digitale Kameras sind in der Regel von sich aus infrarotempfindlich. Ihre Infrarotempfindlichkeit wird aber meist durch entsprechende Infrarotsperrfilter behindert. Für die vorliegende Anwendung kann auf dieses Filter verzichtet werden, so dass für die Kamera eher geringere als höhere Kosten anfallen. Vorteilhaft bei der stroboskopartigen Beleuchtung und der Synchronisierung der Kameras auf die stroboskopartige Beleuchtung ist, dass ein Einfluss einer variablen Umgebungsbeleuchtung auf die Aufnahme weitgehend ausgeschaltet wird, insbesondere bei starker Sonneneinstrahlung, die hohe Infrarotanteile aufweist. Wie bei einer Blitzaufnahme mit einer Fotokamera entsteht im Moment der Beleuchtung eine Art Momentaufnahme des Zeigerobjekts, so dass keine Bewegungsunschärfen auftreten und das Zeigerobjekt infolgedessen klar identifizierbar ist und seine Position für den Zeitpunkt des Stroboskoppulses genau bestimmbar ist. Unter Synchronisation soll verstanden werden, dass die stroboskopartige Beleuchtung zu den Verschlusszeiten der Kameras in einem determinierten Verhältnis stehen. Eine Gleichzeitigkeit ist nicht zwingend erforderlich. Der Stroboskoppuls ist insbesondere kürzer als eine Belichtungszeit der Kamera. Die Verbindung der Kameras zur Rechnereinheit kann direkt oder indirekt ausgebildet sein. Bei einer indirekten Verbindung können die Kameras beispielsweise mit einem FPGA (Field Programmable Gate Array) gekoppelt sein, aus dem die Bilder der Rechnereinheit zugeführt werden.

Die stroboskopartige Beleuchtung kann beispielsweise für jede der Kameras aus deren Sicht separat erfolgen und die Verschlusszeiten der Kameras sequentiell so gestaffelt sein, dass ein Stroboskoppuls der Beleuchtung für eine der Kameras nicht zu Schlagschatten in einer Aufnahme einer der anderen Kameras führt und die Identifizierung oder Ortsbestimmung des Zeigerobjekts erschwert.

Die stroboskopartige Beleuchtung kann auch aus der Sicht aller Kameras zum gleichen Zeitpunkt stattfinden, so dass eine Positionsbestimmung, beispielsweise mittels Triangulation, eine höchstmögliche Genauigkeit aufweist.

Die transparente Scheibe kann beispielsweise ein Schaufenster sein, hinter dem der Bildschirm angeordnet ist. Die Ablenkeinheiten können Spiegel oder Prismen umfassen, die vor der transparenten Scheibe auf der optischen Achse der Kamera liegen. Mit Interaktionsbereich wird der Bereich vor der Scheibe bezeichnet, in dem eine Position oder Bewegung des Zeigerobjekts, beispielsweise eines Fingers detektiert werden soll. Die Kameras und die dazugehörigen Ablenkeinheiten sind insbesondere in den Ecken der transparenten Scheibe angeordnet. In diesem Fall genügt für jede Kombination aus Kamera und Ablenkeinheit ein Sichtfeld mit einem Öffnungswinkel von 90°, um die gesamte Scheibe abzudecken.

Für die stroboskopartige Beleuchtung wird insbesondere Infrarotlicht im Nahinfrarotbereich verwendet. Damit ist ein Wellenlängenbereich zwischen 700 nm und 1,4 pm gemeint. Besonders vorteilhaft ist eine Wellenlänge um 800 nm, da für Schaufenster häufig wärmedämmendes Glas verwendet wird, das Infrarotstrahlung jenseits von 1 µm absorbiert.

Bevorzugt ist für jede der Kameras ein Infrarottransmissionsfilter vorgesehen. Durch diese Maßnahme wird Licht im Wellenlängenbereich des Tageslichts ausgefiltert, so dass die Funktion der Interaktionsanordnung durch unterschiedliche Umgebungslichtverhältnisse kaum oder nicht beeinflusst wird.

Zur stroboskopartigen Beleuchtung werden Beleuchtungsmittel insbesondere so im Bereich der Kamera angeordnet, dass ein Beleuchtungsstrahlengang über die Ablenkeinheit zumindest in den Interaktionsbereich lenkbar ist. Damit wird eine besonders effektive Beleuchtung des Zeigerobjekts ermöglicht, da das der Beleuchtung dienende Licht größtenteils in die gleiche Richtung reflektiert wird, aus der es auftrifft.

Die Position des Zeigerobjekts wird vorzugsweise mittels Triangulation ermittelt. Dazu sind Bilder mit dem Zeigerobjekt aus mindestens zweien der Kameras erforderlich. Das Zeigerobjekt wird in jedem Bild identifiziert und lokalisiert. Ist die Kamera mit der Ablenkeinheit entsprechend kalibriert, kann aus einer Position des Zeigerobjekts im Bild auf einen Winkel geschlossen werden, in dem es sich bezüglich der abgelenkten optischen Achse befindet. Sind diese Winkel für mindestens zwei der Kameras bestimmt, kann mit der Kenntnis einer Basislänge zwischen den Kameras die Position des Zeigerobjekts bezüglich der Kamerapositionen bestimmt werden. Eine Kalibrierung der Kamera in ihrer Montageposition erlaubt die Verwendung kostengünstiger Kameraoptiken, die bezüglich Abbildungsfehlern, wie Verzeichnungen, keine großen Anforderungen erfüllen müssen. Eine Kalibrierung kann beispielsweise so erfolgen, dass bei montierter Kamera ein Rahmenschenkel oder ein anderer Kalibrierkörper im Sichtbereich der Kamera bzw. des durch die Ablenkeinheit abgelenkten Strahlengangs an einer definierten Position angehalten wird und der Rechnereinheit diese Position mitgeteilt wird. Der Kalibrierkörper weist optisch einfach zu identifizierende Punkte oder Strukturen auf, die von der Rechnereinheit im Bild der Kamera aufgefunden und mit der bekannten Position des Rahmenschenkels einer Entzerrung des Bildes zugrunde gelegt werden.

Die Kameras sind vorzugsweise nicht nur mit der stroboskopartigen Beleuchtung, sondern auch miteinander synchronisiert. Beispielsweise können alle Kameras mit einem FPGA (Field Programmable Gate Array) gekoppelt sein, in dem Bilder der Kameras in Framebuffern zwischengespeichert werden. Der FPGA sendet die zeitlich zueinander gehörenden Bilder dann zur Rechnereinheit, beispielsweise über eine USB- oder IEEE 1394-Schnittstelle, oder nimmt bereits eine Art Vorbearbeitung der Bilder vor, beispielsweise die Identifizierung des Zeigerobjekts oder die Positionsbestimmung.

In einer weiteren Ausführungsform ist mindestens ein Strahlengang von einem Aufenthaltsbereich vor der Scheibe, der weiter als der Interaktionsbereich von der Scheibe entfernt ist, durch die Ablenkeinheit oder an der Ablenkeinheit vorbei in die Kamera so lenkbar, dass eine im Aufenthaltsbereich befindliche Person zumindest teilweise in einem Sichtbereich der Kamera liegt. Auf diese Weise können Eigenschaften oder Verhaltensweisen der Person bei der Interaktion berücksichtigt werden, beispielsweise werden im Bildschirm dargestellte Inhalte entsprechend diesen Eigenschaften oder Verhaltensweisen modifiziert. Es fallen keine Kosten für eine zusätzliche Kamera an. Alternativ können eine oder mehrere zusätzliche Kameras zur Aufnahme von Personen vorgesehen sein, die auch vor der Scheibe angeordnet sein können.

Die Ablenkeinheit kann zu diesem Zweck als ein Strahlteiler ausgebildet sein. Strahlteiler werden meist mittels halbdurchlässiger oder teildurchlässiger Spiegel realisiert, bei denen ein Teil des auftreffenden Lichts reflektiert wird und ein weiterer Teil den Spiegel durchdringt. Strahlteiler können auch mit Prismen realisiert werden. Eine weitere Möglichkeit ist, die Ablenkeinheit mit einem zwei- oder mehrteiligen Spiegel zu versehen, wobei einer der Teile Strahlengänge aus Richtung des Aufenthaltsbereichs und ein anderer der Teile Strahlengänge aus Richtung des Interaktionsbereichs zur Kamera leitet. Die Ablenkeinheit kann weitere optische Bauelemente, z.B. Linsen, enthalten.

In einer weiteren Ausführungsform ist eine optische Erkennung eines Gesichts der Person in der Rechnereinheit vorgesehen. Aus dem erkannten Gesicht können eine Reihe von Merkmalen extrahiert werden, die bei der interaktiven Darstellung von Inhalten auf dem Bildschirm berücksichtigt werden können. Beispielsweise kann mit einem aufgrund biometrischer Merkmale erkannten und in der Rechnereinheit bereits bekannten Gesicht ein Verbraucherprofil angelegt oder gepflegt werden, indem die aus den Eingaben der Person abgeleiteten Interessen und Vorlieben der erkannten Person zugeordnet und bei einem späteren Kontakt bei der Präsentation von Inhalten auf dem Bildschirm berücksichtigt werden.

In einer bevorzugten Ausfühl-ungsform ist eine optische Erkennung des Zeigerobjekts, insbesondere eines Fingers in der Rechnereinheit vorgesehen, beispielsweise mittels Mustererkennung. Hierfür kann ein bereits für die Erkennung der Person oder ihres Gesichts implementierter Algorithmus verwendet werden.

Wird die Person durch mehrere der Kameras aufgenommen, lässt sich mittels Triangulation als Eigenschaft eine Körpergröße der Person quantifizieren. Aus der Körpergröße kann beispielsweise geschlussfolgert werden, ob es sich bei der Person um einen Erwachsenen oder um ein Kind handelt. Die Präsentation der Inhalte kann damit auf eine entsprechende Zielgruppe abgestimmt werden.

Ein Alter der Person kann außer aus der Körpergröße auch anhand von Merkmalen des Gesichts geschätzt werden.

Weiter kann als Eigenschaft ein Geschlecht der Person anhand des Gesichts und/oder der Körpergröße erkennbar sein. Auf diese Weise wird eine geschlechts- und altersspezifische Präsentation von Inhalten, beispielsweise Bekleidung, Kosmetika, Technikartikel etc. ermöglicht.

Weiter besteht beispielsweise die Möglichkeit, Brillenträger von Nichtbrillenträgern zu unterscheiden und sie durch entsprechende Inhalte des Bildschirms gezielt anzusprechen.

Bei einer hinreichend präzisen Erfassung des Gesichts der Person kann eine Blickrichtung der Augen der Person bezüglich des Bildschirms erfasst werden. Augenverfolgung (englisch Eye Tracking) wird bereits seit geraumer Zeit beim Fokussieren von Kameras eingesetzt. In der vorliegenden Interaktionsanordnung kann ermittelt werden, auf welche Inhalte des Bildschirms die Person ihr Augenmerk richtet und die Inhalte entsprechend angepasst werden, auch wenn die Person noch zögert, mittels Finger oder Zeigerobjekt aktiv an der Interaktion teilzunehmen.

In einer besonders bevorzugten Ausführungsform wird ein Avatar der Person auf dem Bildschirm dargestellt, der aus den Aufnahmen der Person erstellt wird. Dazu werden insbesondere Aufnahmen mehrere der Kameras verwendet, um ein dreidimensionales Abbild der Person zu erzeugen. Der Avatar kann beispielsweise automatisch oder über weitere Interaktion mittels durch das Zeigerobjekt ausgeführter Aktionen virtuell mit angebotenen Bekleidungsstücken, Brillen oder anderen Accessoü-es versehen werden, um der Person einen Eindruck zu verschaffen, wie diese Artikel zu ihr passen würden und entsprechende Anreize zum Kauf zu setzen. Der Avatar kann der Person Produkte erklären oder als virtueller Verkäufer fungieren.

Der Avatar kann spiegelbildlich dargestellt werden. Da die wenigsten Menschen vollständig symmetrisch sind, ist der gewohnte eigene Anblick im Spiegelbild oft vertrauter als der seitenrichtige Anblick, wie ihn andere Personen oder Film- und Fotoaufnahmen vermitteln. Gerade in einer Anprobesituation kann die spiegelbildliche Darstellung eine unnötige Irritation der Person verhindern.

Bevorzugt sind Abschirmmittel vorgesehen, mittels derer Strahlengänge zur Kamera unterdrückbar sind. Solche unerwünschten Strahlengänge sind beispielsweise Reflexionen oder direkte Einstrahlung durch Sonnenlicht oder künstliche Beleuchtung. Auf diese Weise werden Verfälschungen der von den Kameras aufgenommenen Bilder und Einschränkungen des Dynamikbereichs verringert.

In einer weiteren Ausführungsform sind mindestens ein optischer Detektor und mindestens ein Beleuchtungsmittel so angeordnet, dass mindestens ein Strahlengang mittels Totalreflexion zwischen den Oberflächen der transparenten Scheibe vom Beleuchtungsmittel zum optischen Detektor verläuft, wobei beim Berühren der transparenten Scheibe mit einem als Finger ausgebildeten Zeigerobjekt durch verhinderte Totalreflexion im optischen Detektor ein Fingerabdruck registrierbar ist. Auf diese Weise ist die Person über ihren Fingerabdruck identifizierbar oder wieder erkennbar. Neben der Nutzung für ein Nutzeiprofil oder personalisierte Funktionen, beispielsweise mit einem Nutzerlogin ist eine so gestaltete Interaktionsanordnung auch zur Überwachung und Lokalisierung von Personen geeignet.

Ein Abstand des Zeigerobjekts zur transparenten Scheibe kann auch durch Erfassung eines Spiegelbilds des Interaktionsbereichs mit dem spiegelbildlichen Zeigerobjekt in der transparenten Scheibe und Bestimmung eines Abstands des Zeigerobjekts vom spiegelbildlichen Zeigerobjekt ermittelt werden. Bei einem bewegten Zeigerobjekt, das beispielsweise zum Anklicken eines Softkeys zur Scheibe geführt wird, kann die Bewegungsrichtung aus aufeinanderfolgenden Aufnahmen auf einfache Weise ermittelt werden ohne dass die Lage des Zeigerobjekts gegenüber der Scheibe zu Fehlbestimmungen führt. Beträgt der Abstand des Zeigerobjekts von seinem Spiegelbild Null, ist eine Berührung der Scheibe sicher detektiert.

Bei hinreichender Auflösung der Kameras kann eine Iriserkennung der Augen der Person oder eine Erkennung eines Strichcodes zur Identifizierung oder Authentifizierung vorgesehen sein.

Es können zusätzliche Einrichtungen zur Identifikation der Person vorgesehen sein. Beispielsweise können aktive oder passive RFID-Chips oder Mobiltelefone erkannt werden. Weiter kann eine Eingabe von Nutzernamen und Passwort über die interaktive Bedienung des Bildschirms vorgesehen sein.

Es kann eine zusätzliche akustische Interaktion durch Spracheingabe und Tonausgabe vorgesehen sein.

Es kann eine zusätzliche Interaktion mit dem Bildschirm über Mobiltelefone oder PDA, beispielsweise durch Versenden und/oder Empfangen von Kurznachrichten (SMS) und/oder Multimedianachrichten (MMS) vorgesehen sein. Beispielsweise kann eine Einrichtung zur Kommunikation mit einem Mobiltelefon der Person vorgesehen sein, über die bargeldlose Bezahlungsvorgänge ausführbar sind.

Die Kameras können am Bildschirm oder separat angeordnet sein.

Für die Kameras, Infrarotlichtquellen und den Bildschirm können Kühleinrichtungen vorgesehen sein, um eine lange Lebensdauer der Komponenten auch bei starker Sonneneinstrahlung zu ermöglichen.

Die Infrarotlichtquellen können schmalbandige Lichtquellen sein, beispielsweise Laser. Mit einer solchen Infrarotlichtquelle können besonders gut definierte Strahlen in den Interaktionsbereich gelenkt werden. Beispielsweise kann Licht in der Art eines Gitternetzes projiziert werden, wodurch sich die Positionsbestimmung vereinfachen lässt.

Die Interaktionsanordnung ist beispielsweise zur Identifikation und Verfolgung von Personen in virtuellen Gemeinschaften (Online Communities), Partnervermitllungsagenturen und so genannten Event-Guide-Systemen einsetzbar, bei denen das Geschehen an einem Veranstaltungsort an einem anderen Veranstaltungsort beobachtbar sein soll. Die Interaktion kann dabei dem Austausch von Nachrichten mit anderen Personen in diesen sozialen Netzwerken dienen.

Es können zusätzlich Mittel zur akustischen Interaktion vorgesehen sein. Beispielsweise kann die Person akustische Antworten oder Kommandos geben oder das Interaktionssystem weist mit akustischen Mitteln, beispielsweise durch Ansprache von vor dem Schaufenster stehenden Personen auf Interaktionsmöglichkeiten hin. Die Mittel zur akustischen Interaktion, insbesondere Mikrofone und Lautsprecher können in der Ablenkeinheit untergebracht sein. Eine akustische Kommunikation ist jedoch über kürzere Strecken auch durch die beispielsweise aus Glas gebildete transparente Scheibe möglich.

Auf dem Bildschirm können interaktive Filme dargestellt werden.

Ausführungsbeispiele der Erfindung werden im Folgenden anhand von Zeichnungen näher erläutert.

Darin zeigen:
- Figur 1: eine Interaktionsanordnung zur Interaktion zwischen einem hinter einer transparenten Scheibe angeordneten Bildschirm und einem vor der Scheibe befindlichen Zeigerobjekt, und
- Figur 2: einen Bewegungsablauf des Zeigerobjekts gegenüber der transparen- ten Scheibe.

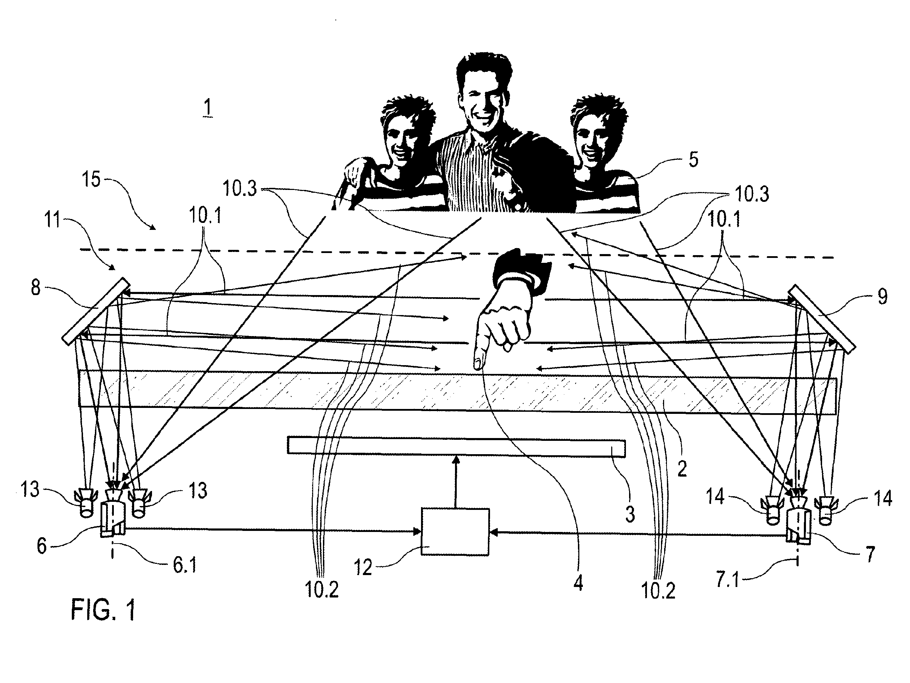

Figur 1 zeigt Interaktionsanordnung 1 eine zur Interaktion zwischen einem hinter einer transparenten Scheibe 2 angeordneten Bildschirm 3 und einem vor der Scheibe 2 befindlichen Zeigerobjekt 4. Auf dem Bildschirm 3 wird beispielsweise eine Menüauswahl oder ein virtueller Schalter (Softkey) angezeigt, der betätigt werden soll. Eine vor der transparenten Scheibe 2, beispielsweise einem Schaufenster stehende Person 5 benutzt einen Finger als Zeigerobjekt 4. Hinter der transparenten Scheibe 2 sind zwei Kameras 6, 7 so angeordnet, dass ihre optischen Achsen 6.1, 7.1 im Wesentlichen senkrecht zur transparenten Scheibe 2 ausgerichtet sind, um die Reflexion gering zu halten. Den Kameras 6, 7 ist jeweils eine Ablenkeinheit 8, 9 zugeordnet, mittels derer Strahlengänge 10.1 von einem Interaktionsbereich 11 in unmittelbarer Nähe der Scheibe 2 in die jeweilige Kamera 6, 7 gelenkt wird.

Eine Rechnereinheit 12, die mit jeder der Kameras 6, 7 verbunden ist, dient der Ermittlung einer Position des für beide Kameras 6, 7 sichtbar geführten Zeigerobjekts 4. Im Bereich der Kameras 6, 7 sind jeweils Infrarotlichtquellen 13, 14 vorgesehen, mit denen der Interaktionsbereich 11 stroboskopartig mit Infrarotlicht beleuchtbar ist. Die Kameras 6, 7 sind dementsprechend infrarotempfindlich ausgebildet und mit der stroboskopartigen Beleuchtung synchronisiert. Kameras 6, 7 und Infrarotlichtquellen 13, 14 können hierzu von der Rechnereinheit 12 gesteuert werden. Die Beleuchtung des Interaktionsbereichs 11 erfolgt mittels Ablenkung zumindest eines Teils der Strahlengänge 10.2 durch die Ablenkeinheiten 8, 9. Zur Bestimmung der Position des Zeigerobjekts 4 sendet zunächst eine der Infrarotlichtquellen 13, 14 einen Lichtpuls aus und beleuchtet den Interaktionsbereich 11 aus Sicht der zugehörigen Kamera 6, 7. Diese Kamera 6, 7 hat zu diesem Zeitpunkt ihren Verschluss geöffnet und macht eine Aufnahme des Interaktionsbereichs 11 mit dem Zeigerobjekt 4. Wenn der Verschluss dieser Kamera 6, 7 wieder geschlossen ist wird der Verschluss der anderen Kamera 7, 6 geöffnet und aus der dazugehörigen Infi-arotlichtquelle 14, 13 ein entsprechender Lichtpuls ausgesendet. In beiden Bildern wird das Zeigerobjekt 4 identifiziert, beispielsweise mittels eines Mustererkennungsverfahrens, und seine Position bestimmt, beispielsweise mittels Triangulation. Die Sequenz der Aufnahmen sollte möglichst so zeitnah erfolgen, dass die Position des Zeigerobjekts 4 auch während einer schnellen Bewegung hinreichend genau erfasst wird. Die Aufnahmen können beispielsweise in einem zeitlichen Abstand in der Größenordnung von 40 ms erfolgen. Aus mehreren aufeinanderfolgend bestimmten Positionen des Zeigerobjekts 4 kann eine Bewegung ermittelt werden. Auf dem Bildschirm 3 kann eine der Position oder Bewegung entsprechende Aktion ausgerührt und ein dargestellter Inhalt entsprechend modifiziert werden.

Weitere Strahlengänge 10.3 sind von einem Aufenthaltsbereich 15 vor der transparenten Scheibe 2, der weiter als der Interaktionsbereich 11 von der Scheibe 2 entfernt ist, an der Ablenkeinheit 8, 9 vorbei in die Kamera 6, 7 so lenkbar, dass die im Aufenthaltsbereich 15 befindliche Person 5 zumindest teilweise im Sichtbereich der Kamera 6, 7 liegt. In der Figur ist der Aufenthaltsbereich 15 vom Interaktionsbereich 11 durch eine gestrichelte Linie getrennt.

Die Strahlengänge 10.3 zur Aufnahme und/oder Erkennung der Person können alternativ auch durch die Ablenkeinheit 8, 9 geführt sein. Die Ablenkeinheit 8, 9 kann zu diesem Zweck als ein Strahlteiler ausgebildet sein. Eine weitere Möglichkeit ist, die Ablenkeinheit 8, 9 mit einem zwei- oder mehrteiligen Spiegel zu versehen, wobei einer der Teile die Strahlengänge 10.3 aus Richtung des Aufenthaltsbereichs 15 und ein anderer der Teile die Strahlengänge 10.1 aus Richtung des Interaktionsbereichs 11 zur Kamera 6, 7 leitet. Die Ablenkeinheit 8, 9 kann weitere optische Bauelemente, z.B. Linsen, enthalten.

Die Interaktionsanordnung 1 ist auch ohne die Erkennung von Personen 5 im Aufenthaltsbereich 15 realisierbar.

Es kann eine andere Anzahl von Kameras 6, 7 mit jeweiligen Ablenkeinheiten 8, 9 vorgesehen sein. Beispielsweise können Kameras 6, 7 in vier Ecken einer als Schaufenster ausgebildeten transparenten Scheibe 2 angeordnet sein.

Die Interaktionsanordnung 1 eignet sich auch zur Verwendung in Verkaufsautomaten, wie Fahrkartenautomaten.

Die stroboskopartige Beleuchtung und die Verschlussöffnung der Kameras 6, 7 kann alternativ zum gleichen Zeitpunkt stattfinden, so dass eine Positionsbestimmung eine höchstmögliche Genauigkeit aufweist.

Die Ablenkeinheiten 8, 9 können Spiegel oder Prismen umfassen.

Für die stroboskopartige Beleuchtung wird insbesondere Infrarotlicht im Nahinfrarotbereich verwendet.

Bevorzugt ist für jede der Kameras 6, 7 ein Filter vorgesehen, das der Kamera 6, 7 nur Wellenlängen im Infrarotbereich zuleitet. Das Filter kann ein Infrarottransmissionsfilter oder eine auf die Ablenkeinheit aufgebrachte Schicht sein, die nur Infrarotlicht in die Kamera 6, 7 reflektiert. Das Filter kann besonders schmalbandig ausgebildet sein, beispielsweise so, dass nur Licht der Wellenlängen von 870 nm bis 880 nm der Kamera zugeleitet wird.

Die Infrarotlichtquellen 13, 14 können alternativ an anderer Stelle angeordnet sein, beispielsweise im Bereich der Ablenkeinheiten 8, 9 vor der transparenten Scheibe 2, so dass ihre Strahlengänge 10. 2 nicht durch die Ablenkeinheiten 8, 9 gelenkt werden müssen.

Die Kameras 6, 7 werden vorzugsweise kalibriert, indem bei montierter Kamera 6, 7 ein Rahmenschenkel oder ein anderer Kalibrierkörper im Sichtbereich der Kamera 6, 7 bzw. des durch die Ablenkeinheit 8, 9 abgelenkten Strahlengangs 10. 1 an einer definierten Position angehalten wird und der Rechnereinheit 12 diese Position mitgeteilt wird.

Die Kameras 6, 7 können mit einem FPGA (Field Programmable Gate Array) gekoppelt sein, in dem Bilder der Kameras 6, 7 in Framebuffern zwischengespeichert werden. Der FPGA sendet die zeitlich zueinander gehörenden Bilder dann zur Rechnereinheit 12, beispielsweise über eine USB- oder IEEE 1394-Schnittstelle, oder nimmt bereits eine Art Vorbearbeitung der Bilder vor, beispielsweise die Identifizierung des Zeigerobjekts 4 oder die Positionsbestimmung.

Es kann eine optische Erkennung eines Gesichts der Person 5 in der Rechnereinheit 12 vorgesehen sein. Aus dem erkannten Gesicht können eine Reihe von Merkmalen extrahiert werden, die bei der interaktiven Darstellung von Inhalten auf dem Bildschirm 12 berücksichtigt werden können. Beispielsweise kann mit einem aufgrund biometrischer Merkmale erkannten und in der Rechnereinheit 12 bereits bekannten Gesicht ein Verbraucherprofil angelegt oder gepflegt werden, indem die aus den Eingaben der Person 5 abgeleiteten Interessen und Vorlieben der erkannten Person 5 zugeordnet und bei einem späteren Kontakt bei der Präsentation von Inhalten auf dem Bildschirm 12 berücksichtigt werden.

Als Zeigerobjekt 4 kann auch ein Gegenstand, wie ein Stift oder ein Regenschirm, erkannt werden. Das Zeigerobjekt 4, insbesondere der Finger kann in der Rechnereinheit 12 mittels Mustererkennung identifiziert werden. Ebenso können Bereiche im Bild mit hoher Intensität mit Hilfe von Histogrammen als wahrscheinlicher Aufenthaltsort des Zeigerobjekts 4 identifiziert werden.

Wird die Person 5 durch mehrere der Kameras 6, 7 aufgenommen, lässt sich mittels Triangulation als Eigenschaft eine Körpergröße der Person 5 quantifizieren.

Aus der Körpergröße kann beispielsweise geschlussfolgert werden, ob es sich bei der Person 5 um einen Erwachsenen oder um ein Kind handelt. Ein Alter der Person 5 kann außer aus der Körpergröße auch anhand von Merkmalen des Gesichts geschätzt werden.

Weiter kann als Eigenschaft ein Geschlecht der Person 5 anhand des Gesichts und/oder der Körpergröße erkennbar sein. Auf diese Weise wird eine geschlechts- und altersspezifische Präsentation von Inhalten, beispielsweise Bekleidung, Kosmetika, Technikartikel etc. ermöglicht.

Weiter besteht beispielsweise die Möglichkeit, Brillenträger von Nichtbrillenträgern zu unterscheiden und sie durch entsprechende Inhalte des Bildschirms 12 gezielt anzusprechen.

Bei einer hinreichend präzisen Erfassung des Gesichts der Person 5 kann eine Blickrichtung der Augen der Person 5 bezüglich des Bildschirms 12 erfasst werden, um zu ermitteln, auf welche Inhalte des Bildschirms 12 die Person 5 ihr Augenmerk richtet und die Inhalte entsprechend anzupassen.

Es kann ein Avatar der Person 5 auf dem Bildschirm 12 dargestellt werden, der aus den Aufnahmen der Person 5 erstellt wird. Dieser Avatar kann beispielsweise automatisch oder über weitere Interaktion mittels durch das Zeigerobjekt 4 ausgeführter Aktionen virtuell mit angebotenen Bekleidungsstücken, Brillen oder anderen Accessoires versehen werden. Der Avatar kann spiegelbildlich dargestellt werden.

Es können Abschirmmittel vorgesehen sein, mittels derer Strahlengänge aus Reflexionen und direkter Einstrahlung durch Sonnenlicht oder künstliche Beleuchtung zur Kamera 6, 7 unterdrückbar sind.

Es können ein optischer Detektor und mindestens ein Beleuchtungsmittel vorgesehen sein, die so angeordnet sind, dass mindestens ein Strahlengang mittels Totalreflexion zwischen den Oberflächen der transparenten Scheibe 2 vom Beleuchtungsmittel zum optischen Detektor verläuft, wobei beim Berühren der transparenten Scheibe 2 mit einem als Finger ausgebildeten Zeigerobjekt 4 durch verhinderte Totalreflexion im optischen Detektor ein Fingerabdruck registrierbar ist. Insbesondere bei Verwendung von mehr als zwei Kameras 6, 7 kann eine gleichzeitige Erkennung der Position von mehr als einem Zeigerobjekt 4 vorgesehen sein, beispielsweise wenn mehrere Personen 5 an der Interaktion teilnehmen oder wenn eine Person 5 zwei Finger zur Interaktion nutzt. Ein Positionieren und Auseinanderziehen von zwei Fingern kann beispielsweise von der Rechnereinheit 12 als Aufforderung zum Einzoomen in den dargestellten Inhalt interpretiert werden.

Es kann mehr als ein Bildschirm 3 hinter der transparenten Scheibe 2 vorgesehen sein, beispielsweise zur Interaktion mit mehreren Personen 5 hinter einem breiten Schaufenster. In diesem Fall sind nicht für jeden der Bildschirme 3 zwei Kameras 6, 7 erforderlich. Stattdessen können durch geschickte Anordnung der Kameras 6, 7 mehrere Zeigerobjekte 4 und/oder Personen 5 gleichzeitig erfasst werden.

Strahlengänge 10.2 der Infrarotlichtquellen 13, 14 können auch in den Aufenthaltsbereich geführt werden, um die Person 5 zu beleuchten.

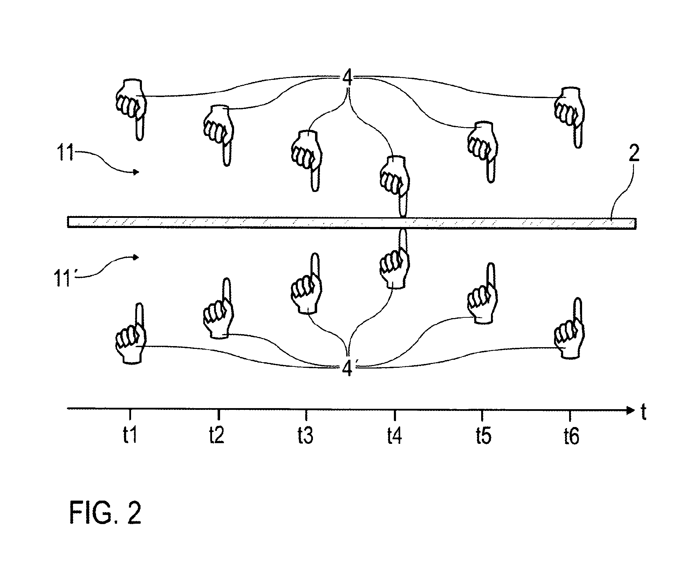

In Figur 2 ist ein möglicher Bewegungsablauf des Zeigerobjekts 4 gegenüber der transparenten Scheibe 2 aus Sicht der Kamera 6, 7 gezeigt. Die Kamera 6, 7 erfasst durch die Ablenkeinheit 8, 9 bedingt sowohl den Interaktionsbereich 11 als auch dessen Spiegelbild 11' in der transparenten Scheibe 2, da an der Scheibe 2 aufgrund des sehr flachen Sichtwinkels der Kamera 6, 7 Totalreflexion auftritt. Befindet sich das Zeigerobjekt 4 im Interaktionsbereich 11, ist ein spiegelbildliches Zeigerobjekt 4' auch im Spiegelbild 11' zu sehen. Ein Abstand des Zeigerobjekts 4 zur transparenten Scheibe 2 lässt sich durch Bestimmung eines Abstands des Zeigerobjekts 4 vom spiegelbildlichen Zeigerobjekt 4' ermitteln. Die Figur zeigt ein und das selbe Zeigerobjekt 4 und dessen spiegelbildliches Zeigerobjekt 4' über der Zeit t bei Annäherung an die Scheibe 2 während der Zeitpunkte t1 bis t3, Berührung der Scheibe 2 zum Zeitpunkt t4 und anschließender Entfernung von der Scheibe 2 während der Zeitpunkte t5 und t6. Wird der Abstand zwischen dem Zeigerobjekt 4 und dem spiegelbildlichen Zeigerobjekt 4' Null, ist ein Berühren der Scheibe 2 sicher detektiert. Beispielsweise kann so ein "Anklicken" eines Softkeys, eines Links oder eines anderen auf dem Bildschirm 3 dargestellten Inhalts erkannt werden.

### BEZUGSZEICHENLISTE

- 1: Interaktionsanordnung
- 2: transparente Scheibe
- 3: Bildschirm
- 4: Zeigerobjekt
- 4': spiegelbildliches Zeigerobjekt
- 5: Person
- 6,7: Kamera
- 6.1, 7.1: optische Achse
- 8, 9: Ablenkeinheit
- 10.1, 10.2, 10.3: Strahlengang
- 11: Interaktionsbereich
- 11': Spiegelbild des Interaktionsbereichs
- 12: Rechnereinheit
- 13, 14: Infrarotlichtquelle
- 15: Aufenthaltsbereich

## Patentansprüche

1. Interaktionsanordnung (1) zur Interaktion zwischen mindestens einem hinter einer transparenten Scheibe (2) angeordneten Bildschirm (3) und mindestens einem vor der Scheibe (2) befindlichen Zeigerobjekt (4), mit mindestens zwei hinter der Scheibe (2) angeordneten Kameras (6, 7), wobei jeder der Kameras (6, 7) eine Ablenkeinheit (8, 9) zugeordnet ist, mittels derer mindestens ein Strahlengang (10.1) von einem Interaktionsbereich (11) in der Nähe und vor der Scheibe (2) in die Kamera (6, 7) lenkbar ist, und einer mit jeder der Kameras (6, 7) verbundene Rechnereinheit (12) zur Ermittlung einer Position des für mindestens zwei der Kameras (6, 7) sichtbar geführten Zeigerobjekts (4), **dadurch gekennzeichnet, dass** mindestens ein Strahlengang (10.3) von einem Aufenthaltsbereich (15) vor der Scheibe (2), der weiter als der Interaktionsbereich (11) von der Scheibe (2) entfernt ist, durch die Ablenkeinheit (8, 9) oder an der Ablenkeinheit (8, 9) vorbei in die Kamera (6, 7) so lenkbar ist, dass eine im Aufenthaltsbereich (15) befindliche Person (5) zumindest teilweise in einem Sichtbereich der Kamera (6, 7) liegt.

2. Interaktionsanordnung (1) nach Anspruch 1, **dadurch gekennzeichnet, dass** zumindest der Interaktionsbereich (11) stroboskopartig mit Infrarotlicht beleuchtbar ist und die Kameras (6, 7) infrarotempfindlich und mit der stroboskopartigen Beleuchtung synchronisiert sind.

3. Interaktionsanordnung (1) nach Anspruch 2, **dadurch gekennzeichnet, dass** für die stroboskopartige Beleuchtung Infrarotlicht im Nahinfrarotbereich vorgesehen ist.

4. Interaktionsanordnung (1) nach Anspruch 2 oder 3, **dadurch gekennzeichnet, dass** für jede der Kameras (6, 7) ein Infrarottransmissionsfilter vorgesehen ist.

5. Interaktionsanordnung (1) nach einem der vorhergehenden Ansprüche, **dadurch gekennzeichnet, dass** die Position des Zeigerobjekts (4) mittels Triangulation ermittelbar ist.

6. Interaktionsanordnung (1) nach einem der vorhergehenden Ansprüche, **dadurch gekennzeichnet, dass** die Kameras (6, 7) miteinander synchronisiert sind.

7. Interaktionsanordnung (1) nach einem der vorhergehenden Ansprüche, **dadurch gekennzeichnet, dass** die Ablenkeinheit (8, 9) als Strahlteiler ausgebildet ist.

8. Interaktionsanordnung (1) nach einem der vorhergehenden Ansprüche, **dadurch gekennzeichnet, dass** eine optische Erkennung des Zeigerobjekts (4) mittels Mustererkennung in der Rechnereinheit (12) vorgesehen ist.

9. Interaktionsanordnung (1) nach einem der vorhergehenden Ansprüche, **dadurch gekennzeichnet, dass** als Eigenschaft eine Körpergröße der Person (5) quantifizierbar ist.

10. Interaktionsanordnung (1) nach einem der vorhergehenden Ansprüche, **dadurch gekennzeichnet, dass** eine optische Erkennung eines Gesichts der Person (5) in der Rechnereinheit (12) vorgesehen ist, wobei gegebenenfalls als Eigenschaft ein Alter der Person (5) anhand des Gesichts und/oder der Körpergröße quantifizierbar ist, und wobei vorzugsweise als Eigenschaft ein Geschlecht der Person (5) anhand des Gesichts und/oder der Körpergröße erkennbar ist.

11. Interaktionsanordnung (1) nach einem der Ansprüche 8 bis 10, **dadurch gekennzeichnet, dass** als Eigenschaft eine von der Person (5) getragene Brille erkennbar ist.

12. Interaktionsanordnung (1) nach einem der Ansprüche 8 bis 11, **dadurch gekennzeichnet, dass** eine Blickrichtung der Augen der Person (5) bezüglich des Bildschirms (12) erfassbar ist.

13. Interaktionsanordnung (1) nach einem der vorhergehenden Ansprüche, **dadurch gekennzeichnet, dass** abhängig von dem Verhalten des Zeigerobjekts (4) und/oder der Person (5) und/oder den ermittelten Eigenschaften der Person (5) auf dem Bildschirm (12) dargestellte Inhalte modifizierbar sind.

14. Interaktionsanordnung (1) nach einem der Ansprüche 8 bis 12, **dadurch gekennzeichnet, dass** ein Avatar der Person (5) auf dem Bildschirm (12) darstellbar ist, wobei der Avatar vorzugsweise spiegelbildlich darstellbar ist.

15. Interaktionsanordnung (1) nach einem der vorhergehenden Ansprüche, **dadurch gekennzeichnet, dass** Abschirmmittel vorgesehen sind, mittels derer unerwünschte Strahlengänge zur Kamera (6, 7) unterdrückbar sind.

## Claims

1. Interaction arrangement (1) for interaction between at least one screen (3) arranged behind a transparent pane (2) and at least one pointer object (4) located in front of the pane (2), comprising at least two cameras (6, 7) arranged behind the pane (2), wherein there is associated with each of the cameras (6, 7) a deflection unit (8, 9) by means of which an optical path (10.1) from an interaction area (11) in the vicinity of and in front of the pane (2) can be directed into the camera (6, 7), and comprising a computing unit (12) connected to all of the cameras (6, 7) for determining a position of the pointer object (4) which is guided so as to be visible for at least two of the cameras (6, 7), **characterized in that** at least one optical path (10.3) from a waiting area (15) in front of the pane (2), which is further away from the pane (2) than the interaction area (11), can be directed through or past the deflection unit (8, 9) into the camera (6, 7) such that a person (5) located in the waiting area (15) is at least partly in a visibility range of the camera (6, 7).

2. Interaction arrangement (1) according to claim 1, **characterized in that** at least the interaction area (11) can be stroboscopically illuminated with infrared light, and the cameras (6, 7) are sensitive to infrared light and can be synchronized with the stroboscopic illumination.

3. Interaction arrangement (1) according to claim 2, **characterized in that** infrared light in the near infrared range is provided for the stroboscopic illumination.

4. Interaction arrangement (1) according to claim 2 or 3, **characterized in that** an infrared transmission filter is provided for each of the cameras (6, 7).

5. Interaction arrangement (1) according to one of the preceding claims, **characterized in that** the position of the pointer object (4) can be determined by triangulation.

6. Interaction arrangement (1) according to one of the preceding claims, **characterized in that** the cameras are synchronized with one another.

7. Interaction arrangement (1) according to one of the preceding claims, **characterized in that** the deflection unit (8, 9) is designed as a beam splitter.

8. Interaction arrangement (1) according to one of the preceding claims, **characterized in that** optical recognition of the face of the person (5) is provided in the computing unit (12).

9. Interaction arrangement (1) according to one of the preceding claims, **characterized in that** a height of the person (5) can be quantified as a characteristic.

10. Interaction arrangement (1) according to one of the preceding claims, **characterized in that** optical recognition of the pointer object (4) by means of pattern recognition is provided in the computing unit (12), wherein, if applicable, an age of the person (5) can be quantified as a characteristic on the basis of the face and/or height, and wherein preferably a gender of the person (5) can be recognized as a characteristic on the basis of the face and/or height.

11. Interaction arrangement (1) according to one of claims 8 through 10, **characterized in that** eyeglasses worn by the person (5) can be recognized as a characteristic.

12. Interaction arrangement (1) according to one of claims 8 through 11, **characterized in that** a direction of gaze of the eyes of the person (5) with respect to the screen (12) can be captured.

13. Interaction arrangement (1) according to one of the preceding claims, **characterized in that** content displayed on the screen (12) can be modified as a function of the behavior of the pointer object (4) and/or of the person (5) and/or as a function of the characteristics of the person (5) that have been determined.

14. Interaction arrangement (1) according to one of claims 8 through 12, **characterized in that** an avatar of the person (5) can be displayed on the screen (12), wherein the avatar preferably can be displayed in mirror-imaged form.

15. Interaction arrangement (1) according to one of the preceding claims, **characterized in that** shielding means are provided, by which means unwanted optical paths to the camera (6, 7) can be suppressed.

## Revendications

1. Système d'interaction (1) pour l'interaction entre au moins un écran (3) disposé derrière une vitre transparente (2) et au moins un objet indicateur (4) situé devant la vitre (2), avec au moins deux caméras (6, 7) disposées derrière la vitre (2), une unité de déflexion (8, 9) étant associée à chacune des caméras (6, 7) à l'aide de laquelle au moins une trajectoire de faisceau (10,1) peut être guidée d'une zone d'interaction (11) à proximité et devant la vitre (2) jusque dans la caméra (6, 7), et une unité de calcul (12) reliée à chacune des caméras (6, 7) pour déterminer une position de l'objet indicateur (4) guidé de manière visible pour au moins deux des caméras (6,7), **caractérisé en ce qu'**au moins une trajectoire de faisceau (10.3) peut être guidée d'une zone de séjour (15) devant la vitre (2), laquelle est plus éloignée de la vitre (2) que la zone d'interaction (11) , à travers l'unité de déflexion (8, 9) ou en passant à côté de l'unité de déflexion (8, 9) jusque dans la caméra (6, 7) de manière à ce qu'une personne (5) se trouvant dans la zone de séjour (15) se trouve au moins en partie dans un champ de vision de la caméra (6, 7).

2. Système d'interaction (1) selon la revendication 1, **caractérisé en ce que** la zone d'interaction (11) au moins peut être éclairée de manière stroboscopique par de la lumière infrarouge et **en ce que** les caméras (6, 7) sont sensibles aux infrarouges et sont synchronisées avec l'éclairage de type stroboscopique.

3. Système d'interaction (1) selon la revendication 2, **caractérisé en ce que** l'on prévoit pour l'éclairage stroboscopique de la lumière infrarouge dans la plage du proche infrarouge.

4. Système d'interaction (1) selon la revendication 2 ou 3, **caractérisé en ce que** l'on prévoit pour chacune des caméras (6, 7) un filtre par transmission pour l'infrarouge.

5. Système d'interaction (1) selon l'une quelconque des revendications précédentes, **caractérisé en ce que** la position de l'objet indicateur (4) peut être déterminée par triangulation.

6. Système d'interaction (1) selon l'une des revendications précédentes, **caractérisé en ce que** les caméras (6, 7) sont synchronisées les unes avec les autres.

7. Système d'interaction (1) selon l'une quelconque des revendications précédentes, **caractérisé en ce que** l'unité de déflexion (8, 9) est réalisée en tant que diviseur de rayonnement.

8. Système d'interaction (1) selon l'une quelconque des revendications précédentes, **caractérisé en ce que** l'on prévoit une reconnaissance optique de l'objet indicateur (4) à l'aide d'une reconnaissance de motif dans l'unité de calcul (12).

9. Système d'interaction (1) selon l'une quelconque des revendications précédentes, **caractérisée en ce qu'**une taille physique de la personne (5) peut être quantifiée en tant que propriété.

10. Système d'interaction (1) selon l'une quelconque des revendications précédentes, **caractérisé en ce que** l'on prévoit une reconnaissance optique du visage de la personne (5) dans l'unité de calcul (12), moyennant quoi l'âge de la personne (5) à l'aide du visage et/ou de la taille physique peuvent être quantifiés en tant que propriété le cas échéant, et moyennant quoi l'on peut reconnaître de préférence un sexe de la personne (5) en guise de propriété à l'aide du visage et/ou de la taille physique.

11. Système d'interaction (1) selon l'une quelconque des revendications 8 à 10, **caractérisé en ce que** l'on peut reconnaître des lunettes portées par la personne (5) en guise de propriété.

12. Système d'interaction (1) selon l'une quelconque des revendications 8 à 11, **caractérisé en ce que** l'on peut détecter une direction du regard des yeux de la personne (5) par rapport à l'écran (12).

13. Système d'interaction (1) selon l'une quelconque des revendications précédentes, **caractérisé en ce qu'**en fonction du comportement de l'objet indicateur (4) et/ou de la personne (5) et/ou des propriétés déterminées de la personne (5), il est possible de modifier des contenus représentés sur l'écran (12).

14. Système d'interaction (1) selon l'une quelconque des revendications 8 à 12, **caractérisé en ce qu'**un avatar de la personne (5) peut être représenté sur l'écran (12), l'avatar étant de préférence représenté en miroir.

15. Système d'interaction (1) selon l'une quelconque des revendications précédentes, **caractérisé en ce que** des moyens de protection sont prévus, grâce auxquels il est possible d'éliminer des trajectoires de faisceaux indésirables vers la caméra (6, 7).
